(19)

Europäisches
Patentamt

European
Patent Office

Office européen
des brevets

(11) **EP 2 492 324 A1**

(12) **EUROPEAN PATENT APPLICATION**

published in accordance with Art. 153(4) EPC

(43) Date of publication:
**29.08.2012 Bulletin 2012/35**

(21) Application number: **10824963.2**

(22) Date of filing: **20.10.2010**

(51) Int Cl.:
*C09J 7/00* (2006.01)   *C09J 11/00* (2006.01)
*C09J 167/02* (2006.01)   *C09J 167/04* (2006.01)
*C09J 175/06* (2006.01)

(86) International application number:
**PCT/JP2010/068455**

(87) International publication number:
**WO 2011/049114 (28.04.2011 Gazette 2011/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2009 JP 2009241723**

(71) Applicant: **Nitto Denko Corporation
Ibaraki-shi, Osaka 567-8680 (JP)**

(72) Inventors:
- **YOSHIE, Satomi
  Ibaraki-shi
  Osaka 567-8680 (JP)**
- **TAKAHIRA, Hitoshi
  Ibaraki-shi
  Osaka 567-8680 (JP)**

(74) Representative: **Müller-Boré & Partner
Patentanwälte
Grafinger Straße 2
81671 München (DE)**

(54) **DOUBLE-FACED PRESSURE-SENSITIVE ADHESIVE SHEET**

(57) Provided is a double sided pressure-sensitive adhesive sheet that is produced using a plant-derived raw material, is global environmentally-friendly, can have reduced adherend selectivity, and exhibits stable adherability to adherends. The double sided pressure-sensitive adhesive sheet includes a pressure-sensitive adhesive layer made from a polyester-based pressure-sensitive adhesive composition containing a polyester including at least a lactic acid unit, a dibasic acid unit, and a glycol unit, a tackifier resin, and a crosslinking agent, wherein the dibasic acid unit includes a dimer acid, the polyester has a weight average molecular weight of 20,000 to 200,000 and a glass transition temperature of -70 to -20°C as measured using a differential scanning calorimeter at a temperature rise rate of 20°C/minute, the polyester has a hydroxyl value of 1 to 60 mgKOH/g, the adhesive composition contains 10 to 70 parts by weight of the tackifier resin based on 100 parts by weight of the polyester, and the pressure-sensitive adhesive layer has a gel fraction of 50 to 90% by weight.

**EP 2 492 324 A1**

**Description**

TECHNICAL FIELD

The invention relates to a double sided pressure-sensitive adhesive sheet.

BACKGROUND ART

Conventionally, double sided pressure-sensitive adhesive sheets or films produced with acryl-based pressure-sensitive adhesives have been often used to bond optical components such as lenses (such as glass lenses and plastic lenses), prisms, reflectors, compensation plates, and polarizing plates (Patent Documents 1 and 2).
Acryl-based pressure-sensitive adhesives, etc. have been generally used as adhesive materials for the double sided pressure-sensitive adhesive sheets and the like, and such pressure-sensitive adhesives are produced using fossil resources (such as petroleum).
On the other hand, in recent years, the use of plant-derived raw materials, which are renewable materials, has been recommended as a measure to prevent depletion of fossil resources or global warming. There has also been a concern about the increase in carbon dioxide due to combustion of fossil resources, which is a cause of global warming, and alternative use of plant-derived materials, which are so-called carbon neutral, has been promoted as a measure against that.
Unfortunately, at present, no available plant-derived acryl-based pressure-sensitive adhesive has been found.

PRIOR ART DOCUMENTS

Patent Documents

   Patent Document 1: Japanese Patent Application Laid-Open (JP-A) No. 2005-23114
   Patent Document 2: JP-A No. 2005-255877

SUMMARY OF THE INVENTION

PROBLEMS TO BE SOLVED BY THE INVENTION

Thus, an object of the invention is to provide a double sided pressure-sensitive adhesive sheet that is produced using a plant-derived raw material, is global environmentally-friendly, can have reduced adherend selectivity, and exhibits stable adherability to adherends.

MEANS FOR SOLVING THE PROBLEMS

As a result of earnest studies to solve the problems, the inventors have found the double sided pressure-sensitive adhesive sheet described below and completed the invention.
Specifically, the invention is directed to a double sided pressure-sensitive adhesive sheet, including: a pressure-sensitive adhesive layer made from a polyester-based pressure-sensitive adhesive composition containing a polyester including at least a lactic acid unit, a dibasic acid unit, and a glycol unit, a tackifier resin, and a crosslinking agent, wherein the dibasic acid unit includes a dimer acid, the polyester has a weight average molecular weight of 20,000 to 200,000 and a glass transition temperature of -70 to -20°C as measured using a differential scanning calorimeter at a temperature rise rate of 20°C/minute, the polyester has a hydroxyl value of 1 to 60 mgKOH/g, the adhesive composition contains 10 to 70 parts by weight of the tackifier resin based on 100 parts by weight of the polyester, and the pressure-sensitive adhesive layer has a gel fraction of 50 to 90% by weight.
In the double sided pressure-sensitive adhesive sheet of the invention, the polyester preferably contains 10 to 50% by mole of the lactic acid unit and 50 to 90% by mole of the other components than the lactic acid unit, and the molar ratio of the dibasic acid unit to the glycol unit is preferably 1:0.8 to 1:1.2.
In the double sided pressure-sensitive adhesive sheet of the invention, the dibasic acid unit preferably further includes an aliphatic dibasic acid other than the dimer acid.
In the double sided pressure-sensitive adhesive sheet of the invention, the polyester preferably includes a tri- or polyfunctional carboxylic acid and/or polyol component as a component other than the lactic acid unit, the dibasic acid unit, and the glycol unit, and the polyester preferably has a dispersity (Mw/Mn) of 2.5 to 10.0.

In the double sided pressure-sensitive adhesive sheet of the invention, the polyester preferably has an acid value of 5 mgKOH/g or less.

In the double sided pressure-sensitive adhesive sheet of the invention, the crosslinking agent is preferably a polyvalent isocyanurate.

In the double sided pressure-sensitive adhesive sheet of the invention, the tackifier resin is preferably obtained from a plant-derived raw material.

EFFECTS OF THE INVENTION

According to the invention, the double sided pressure-sensitive adhesive sheet is produced using a polyester-based pressure-sensitive adhesive composition containing a specific polyester, which is produced using plant-derived raw materials including lactic acid and a dibasic acid, a crosslinking agent, and a specific amount of a tackifier resin. Therefore, in contrast to pressure-sensitive adhesive sheets produced using fossil resource (petroleum)-derived raw materials, the double sided pressure-sensitive adhesive sheet according to the invention can suppress the depletion of fossil resources (petroleum) and can achieve carbon neutral status even when it is used and then peeled off and incinerated. According to the invention, double sided pressure-sensitive adhesive sheets that are global environmentally-friendly, have stable adherability (fixing capability) to various adherends, and can have reduced adherend selectivity can be advantageously obtained.

EMBODIMENTS FOR CARRYING OUT THE INVENTION

The polyester for use in the double sided pressure-sensitive adhesive sheet of the invention contains at least a lactic acid unit, a dibasic acid unit, and a glycol unit. The method for synthesizing the polyester is not restricted, and it can be synthesized using a known polymerization method. As used herein, the term "double sided pressure-sensitive adhesive sheet" is intended to include not only a sheet-shaped product but also a film-shaped product, a tape-shaped product, or the like.

Examples of the lactic acid unit include, but are not limited to, L-lactide, D-lactide, DL-lactide, meso-lactide, L-lactic acid, D-lactic acid, and DL-lactic acid. Among them, DL-lactide is preferred in view of polymerization reaction efficiency and solubility in solvents. The polyester with the desired properties can be obtained by copolymerization with any of these lactic acid units. One of these lactic acid units may be used, or two or more of these lactic acid units may be used in combination.

The content of the lactic acid unit in the polyester components is preferably from 10 to 50% by mole, more preferably from 15 to 45% by mole. If it is less than 10% by mole, the pressure-sensitive adhesive layer produced using the polyester may have reduced elastic modulus, so that the adhesive properties of the pressure-sensitive adhesive may vary with time. If it is more than 50% by mole, the polyester may have a high glass transition temperature (Tg), which is not preferred because it may cause degradation of adhesive properties.

On the other hand, the content of the components other than the lactic acid unit in the polyester components is preferably from 50 to 90% by mole, more preferably from 55 to 85% by mole. If it is less than 50% by mole, the pressure-sensitive adhesive produced using the polyester may have low adhesive properties, and if it is more than 90% by mole, the pressure-sensitive adhesive produced using the polyester may have reduced cohesive strength, which is not preferred because the adhering strength (adhesive strength) to the adherend (such as a backing or substrate) may decrease.

The dibasic acid unit includes a dimer acid. A hydrogenated dimer acid may also be used to form the dimer acid unit. The polyester with good adhesive properties can be obtained by copolymerization with any of these dibasic acid units. One of these dibasic acid units may be used, or two or more of these dibasic acid units may be used in combination.

In the polyester, the dibasic acid unit preferably further includes an aliphatic dibasic acid other than the dimer acid. When an aliphatic dibasic acid other than the dimer acid is subjected to the copolymerization, it can increase the compatibility between the dimer acid and lactic acid, so that they are expected to have increased solubility in solvents.

The aliphatic dibasic acid is typically, but not limited to, a polycarboxylic acid, an alkyl ester thereof, or an acid anhydride thereof.

Examples of the polycarboxylic acid include aliphatic and alicyclic dicarboxylic acids such as adipic acid, azelaic acid, sebacic acid, 1,4-cyclohexanedicarboxylic acid, 4-methyl-1,2-cyclohexanedicarboxylic acid, dodecenyl succinic anhydride, fumaric acid, succinic acid, dodecanedicarboxylic acid, hexahydrophthalic anhydride, tetrahydrophthalic anhydride, maleic acid, maleic anhydride, itaconic acid, and citraconic acid. In particular, sebacic acid, which can be obtained from plants, is preferred. One of these acids may be used, or two or more these acids may be used in combination.

An aromatic dibasic acid may also be used to such an extent that it does not degrade the properties of the polyester for use in the double sided pressure-sensitive adhesive sheet of the invention. Examples of the aromatic dibasic acid include, but are not limited to, terephthalic acid, isophthalic acid, orthophthalic acid, 1,5-naphthalenedicarboxylic acid, 2,6-naphthalenedicarboxylic acid, 4,4'-diphenyldicarboxylic acid, 2,2'-diphenyldicarboxylic acid, and 4,4'-diphenyletherdicarboxylic acid. One of these acids may be used, or two or more of these acids may be used in combination.

For example, the glycol unit to be used may be, but not limited to, an aliphatic glycol. The use of an aliphatic glycol makes it possible to increase the molecular weight of the polyester and to improve the adhesive properties and durability of the pressure-sensitive adhesive produced with the polyester.

Examples of the aliphatic glycol include ethylene glycol, 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, 2,2,4-trimethyl-1,5-pentanediol, 2-ethyl-2-butylpropanediol, 1,9-nonanediol, 2-methyloctanediol, 1,10-decanediol, 1,4-cyclohexanedimethanol, and 1,2-cyclohexanedimethanol. In particular, 1,3-propanediol, which can be obtained from plants, is preferred. One of these glycols may be used, or two or more of these glycols may be used in combination.

Any other glycol unit than the aliphatic glycol may be used in combination with the aliphatic glycol to such an extent that it does not degrade the properties of the polyester for use in the double sided pressure-sensitive adhesive sheet of the invention. Examples of such a glycol include an ethylene oxide adduct and a propylene oxide adduct of bisphenol A, an ethylene oxide adduct and a propylene oxide adduct of hydrogenated bisphenol A, polytetramethylene glycol, polypropylene glycol, polyethylene glycol, and polycarbonate glycol. One of these glycols may be used, or two or more of these glycols may be used in combination.

The molar ratio of the dibasic acid unit to the glycol unit is preferably 1:0.8 to 1:1.2, more preferably 1:0.9 to 1:1.1. If the molar ratio is less than 1:0.8 (the content of the glycol unit is lower), a higher acid value or a lower molecular weight may be obtained, and if it is higher than 1:1.2 (the content of the glycol unit is higher), a lower molecular weight may be obtained, or the adhesive properties may tend to decrease, which is not preferred.

The polyester preferably further contains the tri- or polyfunctional carboxylic acid and/or polyol component as a component other than the lactic acid unit, the dibasic acid unit, and the glycol unit, and the polyester preferably has a dispersity (Mw/Mn) of 2.5 to 10.0, more preferably 2.5 to 9.5. When the dispersity is in the above range, the adhesive strength can be effectively increased, and the pressure-sensitive adhesive can be effectively prevented from being transferred to the adherend. When the tri- or polyfunctional carboxylic acid and/or polyol is added, the molecular weight of the polyester for use in the invention can be further increased, so that the adhesive produced using the polyester can have good adhesive properties. In the description, Mw represents weight average molecular weight, and Mn represents number average molecular weight.

Examples of the tri- or polyfunctional carboxylic acid include, but are not limited to, trimellitic acid, pyromellitic acid, benzophenonetetracarboxylic acid, biphenyltetracarboxylic acid, ethylene glycol bis(anhydrotrimellitate), and glycerol tris(anhydrotrimellitate).

Examples of the tri- or polyfunctional polyol include glycerin, trimethylolpropane, pentaerythritol, and polyglycerin.

In view of reactivity, the content of the tri- or polyfunctional carboxylic acid and/or polyol in the components of the polyester is preferably from 0.01 to 10% by mole, more preferably from 0.1 to 5% by mole.

As far as the properties of the polyester for use in the double sided pressure-sensitive adhesive sheet of the invention are not degraded, glycolic acid or a lactone may also be copolymerized (used), or glycolic acid or a lactone may be added and polymerized after the polymerization of other components to modify the end of the molecule. An acid anhydride may also be added and polymerized after the polymerization of other components to convert the end of the molecule to a carboxyl group. One of these may be used, or two or more of these may be used in combination.

The polyester has a glass transition temperature (Tg) of -70 to -20°C, preferably -60 to -40°C as measured using a differential scanning calorimeter at a temperature rise rate of 20°C/minute. If the Tg is lower than -70°C, the holding power may decrease, and if the Tg is higher than -20°C, the pressure-sensitive adhesive produced using the polyester may have degraded adhesive properties at room temperature, which is not preferred.

The polyester has a weight average molecular weight of 20,000 to 200,000, preferably 50,000 to 150,000. A weight average molecular weight of less than 20,000 may cause a reduction in the adhesive strength of the pressure-sensitive adhesive produced using the polyester. A weight average molecular weight of more than 200,000 is also not preferred, because it may cause a reduction in cohesive strength or in holding power.

The polyester has a hydroxyl value of 1 to 60 mgKOH/g, preferably 2 to 40 mgKOH/g, in particular, preferably 3 to 20 mgKOH/g. If the hydroxyl value is less than 1 mgKOH/g, the polyester will have low reactivity with a crosslinking agent, which will be a cause of a reduction in the cohesive strength of the pressure-sensitive adhesive produced using the polyester. A hydroxyl value of more than 60 mgKOH/g may cause a reduction in water resistance and therefore is not preferred.

The polyester preferably has an acid value of 5 mgKOH/g or less, more preferably 0.1 to 3 mgKOH/g. An acid value of more than 5 mgKOH/g may cause acceleration of hydrolysis and a reduction in durability, and therefore is not preferred.

The polyester-based pressure-sensitive adhesive composition used for the double sided pressure-sensitive adhesive sheet of the invention is preferably a polyester composition containing 50 to 100 parts by weight of the polyester (polyester (i)) and 0 to 50 parts by weight of a branched polyester oligomer (ii) with a hydroxyl value of 100 to 1,000 mgKOH/g, more preferably a polyester composition containing 90 to 99 parts by weight of the polyester (i) and 1 to 10 parts by weight of a branched polyester oligomer (ii) with a hydroxyl value of 100 to 800 mgKOH/g. The addition of the branched polyester oligomer (ii) is effective in accelerating curing (crosslinking) and effective in increasing cohesive strength when it is used to form a pressure-sensitive adhesive (layer). If the hydroxyl value is less than 100 mgKOH/g, the curing-accelerating effect may be insufficient, and a hydroxyl value of more than 1,000 mgKOH/g may cause a reduction in solubility in general-purpose organic solvents, and therefore is not preferred. If the added amount of the branched polyester oligomer (ii) is less than 1 part by weight, the curing-accelerating effect may be insufficient, and an added amount of more than 50 parts by weight may cause degradation of the adhesive properties, and therefore is not preferred. As used herein, the term "polyester composition" is intended to include a polyester alone (the case where only the polyester is used with no branched polyester oligomer) or a mixture of the polyester and the branched polyester oligomer, and the term "polyester-based pressure-sensitive adhesive composition" is intended to include a mixture containing the polyester composition and an additive such as a crosslinking agent.

The branched polyester oligomer (ii) has a branched structure and good solubility in organic solvents, and is relatively cheap from an economic point of view.

The branched polyester oligomer (ii) preferably has a number average molecular weight of 1,000 to 8,000, more preferably 1,000 to 6,000. A number average molecular weight of less than 1,000 may be a cause of staining of the adherend, and a number average molecular weight of more than 8,000 may cause a reduction in reactivity with a crosslinking agent, and therefore is not preferred.

For example, the structure of the branched polyester oligomer (ii) is preferably, but not limited to, a structure having a main skeleton obtained by polycondensation or polyaddition reaction of ABx compound. As used herein, the term "ABx compound" means a compound having different functional groups A and B (organic groups). The ABx compound is also a compound having a functional group that does not cause intramolecular condensation or intramolecular addition reaction but can cause intermolecular condensation or intermolecular addition reaction. In particular, the main skeleton preferably has an ester bond. In the different functional groups, for example, the functional group A is a carboxyl group or a derivative thereof, and the functional group B is a hydroxyl group or a derivative thereof, and the ABx compound is a compound having these groups.

Examples of the ABx compound include 2,2-dimethylolpropionic acid, 2,2-dimethylolbutanoic acid, 5-(2-hydroxyethoxy)isophthalic acid, 5-acetoxyisophthalic acid, 3,5-bis(2-hydroxyethoxy)benzoic acid, 3,5-bis(2-hydroxyethoxy)benzoic acid methyl ester, 4,4-(4'-hydroxyphenyl)pentanoic acid, 5-hydroxycyclohexane-1,3-dicarboxylic acid, 1,3-dihydroxy-5-carboxycyclohexane, 5-(2-hydroxyethoxy)cyclohexane-1,3-dicarboxylic acid, and 1,3-(2-hydroxyethoxy)-5-carboxycyclohexane. In particular, 2,2-dimethylolpropionic acid or 2,2-dimethylolbutanoic acid is preferred in view of versatility of raw material compounds and ease of polymerization reaction process.

The branched polyester oligomer (ii) is also effective, because it has an ester bond and therefore has good compatibility with the polyester (i) so that the product (crosslinked product) of the reaction between them tends to have higher transparency. In particular, a branched polyester oligomer (ii) of an aliphatic monomer tends to have higher compatibility, and therefore is preferred.

The branched polyester oligomer (ii) can be produced by a method including allowing the ABx compound alone to react in the presence of a condensation reaction catalyst to synthesize the oligomer. In addition, a polyol group-containing compound, a polycarboxylic acid, or a compound having both a hydroxyl group and a carboxyl group may be used to form the branched point of the branched polyester oligomer (ii).

Examples of the polyol group-containing compound include various general-purpose glycol compounds and tri- or polyfunctional hydroxyl group-containing compounds such as trimethylolpropane, pentaerythritol, and dipentaerythritol.

Examples of the polycarboxylic acid include various general-purpose dibasic acids and tri- or polyfunctional carboxylic acid compounds such as trimellitic acid, pyromellitic acid, and benzophenonetetracarboxylic acid.

In addition, examples of the compound having both a hydroxyl group and a carboxyl group include glycolic acid, hydroxypivalic acid, 3-hydroxy-2-methylpropionic acid, lactic acid, glyceric acid, malic acid, and citric acid.

Besides the polyol group-containing compound, the polycarboxylic acid, or the compound having both a hydroxyl group and a carboxyl group, a straight-chain (linear) polyester oligomer obtained by condensation reaction of a dibasic acid with a glycol compound, or a specific functional group-containing branched polyester oligomer (iii) obtained by copolymerization of a dibasic acid, a glycol compound, and a tri- or polyfunctional polyol group-containing compound or a polycarboxylic acid may also be used to form the branched point of the branched polyester oligomer (ii).

Any of various general-purpose dibasic acids, a glycol compound, a tri- or polyfunctional polycarboxylic acid, and a polyhydric alcohol compound may be used as a raw material for the straight-chain (linear) polyester oligomer or the specific functional group-containing branched polyester oligomer (iii) capable of forming the branched point.

Examples of the dibasic acid include aliphatic dibasic acids such as succinic acid, adipic acid, azelaic acid, sebacic acid, and dodecanoic acid; aromatic dibasic acids such as terephthalic acid, isophthalic acid, orthophthalic acid, 1,2-naphthalenedicarboxylic acid, and 1,6-naphthalenedicarboxylic acid; and alicyclic dibasic acids such as 1,2-cyclohexanedicarboxylic acid, 1,4-cyclohexanedicarboxylic acid, and 4-methyl-1,2-cyclohexanedicarboxylic acid. Among them, particularly in view of heat resistance, terephthalic acid, isophthalic acid, orthophthalic acid, 1,2-naphthalenedicarboxylic acid, and 1,6-naphthalenedicarboxylic acid are preferred, and terephthalic acid, 1,2-naphthalenedicarboxylic acid, and 1,6-naphthalenedicarboxylic acid are particularly preferred.

Examples of the glycol compound include aliphatic diols such as ethylene glycol, 1,2-propylene glycol, 1,3-propylene glycol, 1,2-butylene glycol, 1,3-butylene glycol, 2,3-butylene glycol, 1,4-butylene glycol, 2-methyl-1,3-propylene glycol, neopentyl glycol, 3-methyl-1,5-pentadiol, 2,2,4-trimethyl-1,3-pentanediol, 2,4-diethyl-1,5-pentanediol, 2-ethyl-1,3-hexanediol, 2,2-dimethyl-3-hydroxypropyl-2',2'-dimethyl-3-hydroxypropanate, 2-n-butyl-2-ethyl-1,3-propanediol, 3-ethyl-1,5-pentanediol, 3-propyl-1,5-pentanediol, 2,2-diethyl-1,3-propanediol, and 3-octyl-1,5-pentanediol; alicyclic glycols such as 1,3-bis(hydroxymethyl)cyclohexane, 1,4-bis(hydroxymethyl)cyclohexane, 1,4-bis(hydroxyethyl)cyclohexane, 1,4-bis(hydroxypropyl)cyclohexane, 1,4-bis(hydroxymethoxy)cyclohexane, 1,4-bis(hydroxyethoxy)cyclohexane, 2,2-bis(4-hydroxymethoxycyclohexyl)propane, 2,2-bis(4-hydroxyethoxycyclohexyl)propane, bis(4-hydroxycyclohexyl)methane, 2,2-bis(4-hydroxycyclohexyl)propane, and 3(4),8(9)-tricyclo[5.2.1. O$^{2,6}$]decanedimethanol; and aromatic glycols such as ethylene oxide or propylene oxide adducts of bisphenol A or the like.

In addition, examples of the tri- or polyfunctional polycarboxylic acid and the polyol group-containing compound include trimellitic acid, pyromellitic acid, benzophenonetetracarboxylic acid, glycerin, trimethylolpropane, and pentaerythritol.

Examples of the method for removing water produced by the polymerization (condensation) reaction include a method of removing water by azeotrope with toluene or xylene, a method including blowing inert gas into the reaction system so that the produced water and monoalcohol can be discharged together with the inert gas to the outside of the reaction system, and a method of distillation under reduced pressure.

The polymerization catalyst used in the polymerization (condensation) reaction may be one commonly used in the production of polyesters, and examples of such a catalyst include, but are not limited to, various metal compounds such as titanium-based, tin-based, antimony-based, zinc-based, and germanium-based compounds; and strong acid compounds such as p-toluenesulfonic acid and sulfuric acid.

In order to increase the compatibility with the polyester, it is more preferred to introduce a long-chain hydrocarbon group of 6 or more carbon atoms into the end group of the branched polyester oligomer. For example, a hydrocarbon group of 6 or more carbon atoms may be introduced by a method of performing addition reaction or condensation reaction of a compound having a hydrocarbon group of 6 or more carbon atoms with the terminal carboxyl or hydroxyl group of the branched polyester oligomer prepared previously. Examples of such a compound include a monoalcohol having a long-chain alkyl group, such as hexanol, octanol, decyl alcohol, undecyl alcohol, or dodecyl alcohol; and a monocarboxylic acid having a long-chain alkyl or alkenyl group, such as octanoic acid, decanoic acid, dodecanoic acid, myristic acid, palmitic acid, stearic acid, or oleic acid having an unsaturated group, or a methyl ester derivative thereof.

There are also a method of performing ring-opening addition of a carboxylic anhydride compound having a hydrocarbon group of 6 or more carbon atoms to the terminal hydroxyl group in the presence of a basic catalyst; and a method of performing addition reaction of a compound having a glycidyl group and a hydrocarbon group of 6 or more carbon atoms with the terminal carboxyl group in the presence of an appropriate catalyst such as triphenylphosphine. The compound having a hydrocarbon group may be an acid anhydride compound, examples of which include dodecenylsuccinic anhydride and octadecylsuccinic anhydride. Examples of the compound having a glycidyl group include various aryl glycidyl ethers such as phenyl glycidyl ether; polyethylene glycol monoglycidyl ether, polypropylene glycol monoglycidyl ether, and polytetramethylene glycol monoglycidyl ether; and monoglycidyl ethers such as alkyl, alkenyl, and alkynyl glycidyl ethers.

The polyester composition preferably has a total hydroxyl value of 1 to 200 mgKOH/g, more preferably 5 to 100 mgKOH/g. If the total hydroxyl value is less than 1 mgKOH/g, the curing accelerating effect may be insufficient, and a total hydroxyl value of more than 200 mgKOH/g may reduce the adhesive properties and therefore is not preferred.

In a preferred mode, the polyester-based pressure-sensitive adhesive composition is produced using a plant-derived raw material. This is because the plant-derived raw material, which is biodegradable and said to be so-called carbon neutral, can form a global environmentally-friendly or environmentally-sound, pressure-sensitive adhesive. The composition preferably has a biomass degree of 70% or more, more preferably 80% or more, which is a measure of how much plant-derived material the composition contains. As used herein, the term "biomass degree (%)" means the plant-derived material content, which is the calculated ratio of the weight of the plant-derived raw material(s) used to the total weight of the raw materials used to form the polyester-based pressure-sensitive adhesive composition. Examples of the plant-derived raw material include a dimer acid, sebacic acid or the like for the dibasic acid component, lactic acid for the lactic acid component, and 1,3-propylene glycol for the glycol (diol) component.

The polyester-based pressure-sensitive adhesive composition used for the double sided pressure-sensitive adhesive sheet of the invention contains: a polyester including at least a lactic acid unit, a dibasic acid unit, and a glycol unit; a tackifier resin; and a crosslinking agent.

A pressure-sensitive adhesive layer can be formed by subjecting the crosslinking agent-containing pressure-sensitive adhesive composition to a crosslinking reaction. The crosslinking agent to be used may be any conventionally known one such as a polyvalent isocyanurate, a polyfunctional isocyanate, a polyfunctional melamine compound, a polyfunctional epoxy compound, a polyfunctional oxazoline compound, a polyfunctional aziridine compound, or a metal chelate compound. In a preferred mode, a polyvalent isocyanurate or a polyfunctional isocyanate compound is used, particularly in view of the transparency of the resulting pressure-sensitive adhesive layer or the achievement of high gel fraction.

For example, the polyvalent isocyanurate may be a polyisocyanurate of hexamethylene diisocyanate. The use of such a compound makes it possible to achieve the object of obtaining a pressure-sensitive adhesive layer with transparency and high gel fraction, and therefore is advantageous. Commercially available products of the polyvalent isocyanurate may also be used, examples of which include DURANATE TPA-100 (trade name, manufactured by Asahi Kasei Chemicals Corporation) and CORONATE HK, CORONATE HX, and CORONATE 2096 (trade names, manufactured by Nippon Polyurethane Industry Co., Ltd.). One of these may be used, or two or more of these may be used in combination.

The polyfunctional isocyanate compound is preferably, but not limited to, a compound having at least two isocyanate groups, more preferably three or more isocyanate groups in the molecule (when the composition contains the branched polyester oligomer (ii), it may have two or more isocyanate groups), examples of which include aliphatic polyisocyanates, alicyclic polyisocyanates, and aromatic polyisocyanates. One of these may be used, or two or more of these may be used in combination.

Examples of the aliphatic polyisocyanates include 1,2-ethylene diisocyanate, tetramethylene diisocyanates such as 1,2-tetramethylene diisocyanate, 1,3-tetramethylene diisocyanate, and 1,4-tetramethylene diisocyanate; hexamethylene diisocyanates such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate, and 2,5-hexamethylene diisocyanate; and 2-methyl-1,5-pentane diisocyanate, 3-methyl-1,5-pentane diisocyanate, and lysine diisocyanate.

Examples of the alicyclic polyisocyanates include isophorone diisocyanate; cyclohexyl diisocyanates such as 1,2-cyclohexyl diisocyanate, 1,3-cyclohexyl diisocyanate, and 1,4-cyclohexyl diisocyanate; cyclopentyl diisocyanates such as 1,2-cyclopentyl diisocyanate and 1,3-cyclopentyl diisocyanate; hydrogenated xylylene diisocyanate, hydrogenated tolylene diisocyanate, hydrogenated diphenylmethane diisocyanate, hydrogenated tetramethylxylene diisocyanate, and 4,4'-dicyclohexylmethane diisocyanate.

Examples of the aromatic polyisocyanates include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate, and xylylene-1,3-diisocyanate.

The polyfunctional isocyanate compound may also be a dimer or trimer of any of the aliphatic polyisocyanates, alicyclic polyisocyanates, aromatic polyisocyanates, and aromatic aliphatic polyisocyanates, and specifically, the polyfunctional isocyanate compound may be a dimer or trimer of diphenylmethane diisocyanate, a reaction product of trimethylolpropane and tolylene diisocyanate, a reaction product of trimethylolpropane and hexamethylene diisocyanate, or a polymer such as polymethylene polyphenylisocyanate, polyether polyisocyanate, or polyester polyisocyanate.

Commercially available products of the polyfunctional isocyanate compound may also be used, examples of which include CORONATE L (trade name, manufactured by Nippon Polyurethane Industry Co., Ltd.) as a trimer adduct of trimethylolpropane and tolylene diisocyanate, and CORONATE HL (trade name, manufactured by Nippon Polyurethane Industry Co., Ltd.) as a trimer adduct of trimethylolpropane and hexamethylene diisocyanate.

Examples of the polyfunctional melamine compound include methylated methylolmelamine and butylated hexamethylolmelamine, and examples of the polyfunctional epoxy compound include diglycidyl aniline and glycerin diglycidyl ether. One of these may be used, or two or more of these may be used in combination.

While the type or added amount of the crosslinking agent is not restricted, the crosslinking agent should be added so that a pressure-sensitive adhesive layer with a gel fraction of 50 to 90% by weight, preferably 60 to 80% by weight can be formed in a pressure-sensitive adhesive sheet for applications where peeling is performed through heating. If the gel fraction is less than 50% by weight, the cohesive strength may be insufficient so that heat resistance may tend to decrease. On the other hand, a gel fraction of more than 90% by weight is not preferred, because at such a gel fraction, the adhesive strength may be low, so that fixation may be difficult. To reduce the adherend selectivity, the control of the amount of the tackifier agent added to the pressure-sensitive adhesive composition is also important as well as the gel fraction of the pressure-sensitive adhesive layer.

For example, the added amount of the crosslinking agent is preferably from 0.001 to 20 parts by weight, more preferably from 0.001 to 10 parts by weight, based on 100 parts by weight of the polyester composition (which means the polyester when only the polyester is used with no branched polyester oligomer). If the added amount is less than 0.001 parts by weight, the process of forming the pressure-sensitive adhesive layer may fail to increase cohesive strength. An added amount of more than 20 parts by weight is not preferred, because with such an amount, the resulting pressure-sensitive adhesive layer may fail to have sufficient adhesive strength and may have reduced adhesive strength.

A catalyst may also be used as appropriate to efficiently control the gel fraction of the pressure-sensitive adhesive layer used to form the double sided pressure-sensitive adhesive sheet of the invention. Examples of the catalyst include tetra-n-butyl titanate, tetraisopropyl titanate, butyltin oxide, and dioctyltin dilaurate.

The added amount of the catalyst is preferably, but not limited to, 0.01 to 1 part by weight, more preferably 0.05 to 0.5 parts by weight, based on 100 parts by weight of the polyester composition (the polyester or a mixture of the polyester and the branched polyester oligomer). If the added amount is less than 0.01 parts by weight, the added catalyst may fail to be effective, and an added amount of more than 1 part by weight is not preferred, because such an amount may significantly reduce shelf life and reduce coating stability.

The polyester-based pressure-sensitive adhesive composition for forming the pressure-sensitive adhesive layer for use in the invention may also contain a combination of the crosslinking agent and a tackifier resin, which makes it possible to obtain a pressure-sensitive adhesive composition (a pressure-sensitive adhesive or a pressure-sensitive adhesive layer) having the desired properties.

The tackifier resin is not restricted and may be any conventionally known one, examples of which include a terpene-based tackifier resin, a phenol-based tackifier resin, a rosin-based tackifier resin, an aliphatic petroleum resin, an aromatic petroleum resin, a copolymer-based petroleum resin, an alicyclic petroleum resin, a xylene resin, an epoxy-based tackifier resin, a polyamide-based tackifier resin, a ketone-based tackifier resin, and an elastomer-based tackifier resin. In particular, a rosin- or terpene-based tackifier resin produced from a plant-derived raw material is preferably used so that the biomass degree can be increased. One of these may be used, or two or more of these may be used in combination.

Examples of the terpene-based tackifier resin include a terpene resin, a terpene phenol resin, and an aromatic modified terpene resin, and specific examples that may be used include an α-pinene polymer, a β-pinene polymer, a dipentene polymer, and modifications thereof, such as a phenol-modified terpene-based resin, an aromatic modified terpene-based resin, a hydrogenated modified terpene-based resin, and a hydrocarbon-modified terpene-based resin.

Examples of the phenol-based tackifier resin that may be used include condensation products of formaldehyde and any of various phenols such as phenol, m-cresol, 3,5-xylenol, p-alkylphenol, and resorcin. Further examples that may be used include resols obtained by addition reaction of formaldehyde and any of the phenols in the presence of an alkali catalyst; novolac resins obtained by condensation reaction of formaldehyde and any of the phenols in the presence of an acid catalyst; and rosin-modified phenolic resins obtained by addition reaction of phenol with any of rosins such as unmodified or modified rosin and derivatives thereof and thermal polymerization of the addition product.

Examples of the rosin-based tackifier resin include a rosin resin, a polymerized rosin resin, a hydrogenated rosin resin, a rosin ester resin, a hydrogenated rosin ester resin, and a rosin phenol resin. Specific examples that may be used include unmodified rosin (raw rosin) such as gum rosin, wood rosin, or tall oil rosin, modified rosin obtained by hydrogenation, disproportionation, polymerization, or any other chemical modification thereof, and derivatives thereof.

The added amount of the tackifier resin is preferably from 10 to 70 parts by weight, more preferably from 20 to 65 parts by weight, in particular, preferably from 20 to 60 parts by weight, based on 100 parts by weight of the polyester composition (the polyester or a mixture of the polyester and the branched polyester oligomer). If the added amount is less than 10 parts by weight, the desired adhesive strength may fail to be obtained, and a pot-life effect may also fail to be produced. An added amount of more than 70 parts by weight is not preferred, because with such an amount, the crosslinking effect based on the addition of the crosslinking agent may be insufficient, and the compatibility with the polymer component (the polyester composition) may also be degraded, so that a problem such as a reduction in adhesive strength may occur. The added amount of the tackifier resin is controlled so that the adherend selectivity can be reduced. If the tackifier resin is added in a large amount, the holding power may decrease, and therefore, in order to suppress the decrease, the gel fraction of the pressure-sensitive adhesive layer should be controlled to be high. Unfortunately, if the gel fraction is controlled to be high, the adhesive strength may decrease. In the invention, therefore, it is important to control the gel fraction and the added amount of the tackifier resin and to strike a balance between them.

Any of common additives such as ultraviolet absorbers, photostabilizers, peeling regulators, plasticizers, softening agents, fillers, colorants such as pigments and dyes, antioxidants, and surfactants may be used to such an extent that the properties of the pressure-sensitive adhesive layer (pressure-sensitive adhesive) for use in the double sided pressure-sensitive adhesive sheet of the invention are not degraded.

The pressure-sensitive adhesive layer is made from the polyester-based pressure-sensitive adhesive composition. The use of the polyester-based pressure-sensitive adhesive composition makes it possible to obtain a global environmentally-friendly pressure-sensitive adhesive layer with good adhesive properties.

The pressure-sensitive adhesive layer preferably has a storage modulus of $1 \times 10^4$ to $1 \times 10^7$ Pa, more preferably

$1\times10^5$ to $1\times10^6$ Pa, as measured using a dynamic viscoelasticity meter under the conditions of 23°C and a frequency of 1 Hz. A storage modulus of less than $1\times10^4$ Pa may cause the problem of a reduction in the cohesive strength and holding power of the pressure-sensitive adhesive layer. On the other hand, a storage modulus of more than $1\times10^7$ Pa is not preferred, because such a storage modulus may cause the problem of hardening of the pressure-sensitive adhesive layer and a reduction in pressure-sensitive adhesive strength.

For example, the thickness of the pressure-sensitive adhesive layer, which may be arbitrarily selected, is preferably from about 5 to about 1,000 $\mu$m, more preferably from about 20 to about 500 $\mu$m, in particular, preferably from about 30 to about 200 $\mu$m. If the thickness of the pressure-sensitive adhesive layer is less than 5 $\mu$m, sufficient adhesive strength may be difficult to be obtained, so that peeling may easily occur. A thickness of more than 1,000 $\mu$m is not preferred, because with such a thickness, the adhesive strength may increase with time, which may make peeling difficult. The pressure-sensitive adhesive layer may be in the form of any of a single layer and a laminate.

The double sided pressure-sensitive adhesive sheet of the invention may be formed using only the pressure-sensitive adhesive layer (a backing-less, single pressure-sensitive adhesive layer). Alternatively, it may be a double sided pressure-sensitive adhesive sheet including a substrate and the pressure-sensitive adhesive layer placed on each side of the substrate. As far as the characteristics of the double sided pressure-sensitive adhesive sheet of the invention are not degraded, an intermediate layer or an undercoat layer can also be provided with no problem.

The substrate to be used is not restricted and may be any conventionally known one, and any of various substrates (backings) may be used, such as plastic films and porous materials such as paper sheets and unwoven fabrics. For surface protection applications, plastic films are preferably used in view of durability or the like. Examples of the plastic films include polyolefin films such as polyethylene, polypropylene, poly-1-butene, poly-4-methyl-1-pentene, ethylene-propylene copolymer, ethylene-1-butene copolymer, ethylene-vinyl acetate copolymer, ethylene-ethyl acrylate copolymer, and ethylene-vinyl alcohol copolymer films; polyester films such as polyethylene terephthalate, polyethylene naphthalate, and polybutylene terephthalate films; polyacrylate films; polystyrene films; polyamide films such as nylon 6, nylon 6,6, and partially aromatic polyamide films; and polyvinyl chloride films; polyvinylidene chloride films; and polycarbonate films. Substrates comprising polylactic acid or cellulose, which is obtained from plant-derived raw materials, are advantageously used.

If necessary, the substrate may contain any of various additives commonly used in backings (substrates) for pressure-sensitive adhesive tapes, such as ultraviolet absorbers, photostabilizers, antioxidants, fillers, pigments, and dyes.

When a plastic-based material is used as the substrate (backing), its deformability such as elongation may be controlled by stretching or other processes.

The surface of the substrate (backing) may have undergone a common surface treatment for enhancing adhesion to various pressure-sensitive adhesive layers (which may also include pressure-sensitive adhesive layers containing thermally-expandable fine particles or a surfactant), such as a chromic acid treatment, exposure to ozone, exposure to a flame, exposure to a high-voltage electric shock, an ionizing radiation treatment, or any other chemical or physical oxidation treatment, or a coating treatment with an undercoating agent. A coating treatment with a release agent such as silicone resin or fluororesin may also be performed to impart peelability to interfaces between various pressure-sensitive adhesive layers.

The thickness of the substrate (backing) may be arbitrarily selected depending on the material or shape of the substrate. For example, it is preferably from about 1 to about 1,000 $\mu$m, more preferably from about 1 to about 500 $\mu$m, even more preferably from 3 to 300 $\mu$m, in particular, preferably from 5 to 250 $\mu$m. A thickness out of the range may reduce workability or processability and therefore is not preferred.

The method of forming the pressure-sensitive adhesive layer may be based on a known pressure-sensitive adhesive sheet-manufacturing method, examples of which include, but are not limited to, a method including applying a pressure-sensitive adhesive composition (a solution of a pressure-sensitive adhesive composition in a solvent or a hot melt of a pressure-sensitive adhesive composition) to the substrate (backing) and drying the coating to form a pressure-sensitive adhesive layer, a method of transferring a pressure-sensitive adhesive layer formed on a release liner, a method of extruding and applying a pressure-sensitive adhesive layer-forming material onto the substrate, a method of extruding the substrate and a pressure-sensitive adhesive layer in two or more layers, and a method of laminating the substrate with a single pressure-sensitive adhesive layer. A co-extruding method or the like may also be used, in which a thermoplastic resin substrate and a pressure-sensitive adhesive layer are extruded in two or more layers by inflation molding or T-die molding.

The pressure-sensitive adhesive composition (solution) may be applied using a conventionally known method such as roll coating, gravure coating, reverse roll coating, roll brush coating, air knife coating, spray coating, or extrusion coating with a die coater or the like.

The release liner is not restricted, and any conventionally-known release liner may be used as appropriate. For example, a product obtained by forming a release coating layer on at least one side of a release liner backing may be used. The release liner backing may be used in the form of a single layer or a plurality of layers.

Any of various thin materials such as plastic films, paper sheets, foamed products, and metal foils may be used as the release liner backing, and a plastic film is particularly preferred. Examples of the material for the plastic film include polyester such as polyethylene terephthalate, polyolefin such as polypropylene or ethylene-propylene copolymer, and thermoplastic resin such as polyvinyl chloride.

The thickness of the release liner backing may be selected as appropriate, depending on purpose.

The release coating layer is not restricted, and any conventionally-known release coating layer may be used. For example, a coating layer including an appropriate release agent such as a silicone, long-chain alkyl, or fluoride release agent may also be provided.

(Adhesive Strength)

The double sided pressure-sensitive adhesive sheet of the invention preferably has an adhesive strength (such as an adhesive strength to a SUS or acrylic plate) of 9 N/20 mm or more, more preferably 20 N/20 mm or more, at 23°C and a peel angle of 180° with respect to a stainless steel plate, an acrylic plate, or any other plate. An adhesive strength of less than 9 N/20 mm is not preferred, because such an adhesive strength is not sufficient to the adherend (such as a stainless steel plate or an acrylic plate), so that a trouble such as peeling may occur during use.

(Holding Power)

The holding power of the double sided pressure-sensitive adhesive sheet of the invention may be measured by a process that includes bonding a substrate (backing) to one pressure-sensitive adhesive surface of the pressure-sensitive adhesive layer (single pressure-sensitive adhesive layer) used in the double sided pressure-sensitive adhesive sheet, bonding a Bakelite plate to the other pressure-sensitive adhesive surface so that the bonding area can be 10 mm x 20 mm, allowing the resulting laminate to stand at 40°C for 1 hour while applying a load of 500 g to the laminate, and then measuring the distance of displacement of the Bakelite plate, in which the distance of displacement of the Bakelite plate is preferably 2.5 mm or less, more preferably 1.0 mm or less. If the distance of displacement (holding power) is more than 2.5 mm, the ability to fix the adherend may be insufficient, which is not preferred.

The double sided pressure-sensitive adhesive sheet of the invention has reduced adherend selectivity and can exhibit good adhesive properties to a variety of adherends, and therefore, the double sided pressure-sensitive adhesive sheet of the invention can be widely used in conventionally-known double sided pressure-sensitive adhesive sheet applications (including tapes, films, rolls, etc.). In addition, the double sided pressure-sensitive adhesive sheet of the invention is particularly preferably used in double sided pressure-sensitive adhesive sheet applications where the sheet is peeled off and incinerated after use, because the load on the global environment is relatively small even when it is disposed after use.

EXAMPLES

Hereinafter, the invention is described in more detail with reference to the Examples, which are not intended to limit the invention. In the examples, the term "parts" means "parts by weight." The formulations and the results of evaluation are shown in Tables 1 and 2. In Table 1, the content of each monomer component used in the polyester synthesis is shown in units of % by mole, and in Table 2, each added amount is shown in parts by weight. The pressure-sensitive adhesive sheet used in each of the examples and so on means a laminate including a single pressure-sensitive adhesive layer and release-treated polyethylene terephthalate films bonded to both pressure-sensitive adhesive surfaces of the single layer (a laminate composed of a single pressure-sensitive adhesive layer and release-treated separator films bonded to both sides of the single layer)

(Preparation of Polyester A)

To a reaction can equipped with a stirrer, a thermometer, and a drain condenser were added 86 parts of dimer acid, 10 parts of sebacic acid, 30 parts of 1,3-propylene glycol, 0.4 parts of trimethylolpropane, 50 parts of DL-lactide, and 0.014 parts of tetrabutyl titanate and 0.014 parts of tin octylate as polymerization catalysts. After the temperature was raised to 250°C over 5 hours in a nitrogen atmosphere at normal pressure, the mixture was allowed to react for 1 hour, in which esterification was performed while distilled water was removed out of the system. The pressure was further reduced to 10 mmHg over 30 minutes, and early-stage polymerization was performed at 250°C for 30 minutes. The pressure was further reduced to 1 mmHg over 30 minutes, and late-stage polymerization was performed at 250°C, so that a polyester A was obtained. The formulation and the results of the evaluation are shown in Table 1.

<Preparation of Polyester B>

To a reaction can equipped with a stirrer, a thermometer, and a drain condenser were added 22 parts of L-lactide, 15 parts of DL-lactide, 54 parts of ε-caprolactone, 0.2 parts of ethylene glycol, and 0.026 parts of tin octylate as a polymerization catalyst. After the temperature was raised to 180°C over 1 hour in a nitrogen atmosphere at normal pressure, the mixture was allowed to react for 3 hours, in which esterification was performed while distilled water was removed out of the system. The pressure was further reduced to 1 mmHg over 10 minutes. The pressure was reduced at 180°C over 30 minutes, so that the lactide residue was removed, and a polyester B was obtained. The formulation and the results of the evaluation are shown in Table 1.

<Example 1>

After 100 parts of the polyester A was dissolved in a mixed solvent of 75 parts of methyl ethyl ketone (MEK) and 75 parts of ethyl acetate, 2 parts of a polyvalent isocyanurate (TPA-100, manufactured by Asahi Kasei Chemicals Corporation) as a crosslinking agent, 20 parts of a tackifier resin (Rikatack PCJ, manufactured by Rika Fine-Tech Inc. Tokushima) were added to the solution. The resulting mixture was applied onto a release-treated, polyethylene terephthalate film (A) (LUMIRROR 25S-10, manufactured by TORAY INDUSTRIES, INC., 25 μm in thickness) so that a 100 μm thick coating (single pressure-sensitive adhesive layer) could be formed after drying, and the coating was dried at 100°C for 3 minutes. Subsequently, to protect the adhesive surface of the pressure-sensitive adhesive layer, the release-treated surface of a release-treated polyethylene terephthalate film (B) (LUMIRROR 25S-10, manufactured by TORAY INDUSTRIES, INC., 25 μm in thickness) was bonded to the adhesive surface, and the resulting laminate was allowed to stand (aged) at 50°C for 5 days so that a pressure-sensitive adhesive sheet was obtained.

<Example 2>

A pressure-sensitive adhesive sheet was obtained by the same process as in Example 1, except that 8 parts of a polyvalent isocyanurate (TPA-100, manufactured by Asahi Kasei Chemicals Corporation) as a crosslinking agent and 60 parts of a tackifier resin (Rikatack PCJ, manufactured by Rika Fine-Tech Inc. Tokushima) were added instead.

<Example 3>

A pressure-sensitive adhesive sheet was obtained by the same process as in Example 1, except that 4 parts of a polyvalent isocyanurate (TPA-100, manufactured by Asahi Kasei Chemicals Corporation) as a crosslinking agent and 50 parts of a tackifier resin (Rikatack PCJ, manufactured by Rika Fine-Tech Inc. Tokushima) were added instead.

<Example 4>

A pressure-sensitive adhesive sheet was obtained by the same process as in Example 1, except that after a polyester composition composed of 100 parts of the polyester A and 8 parts of a branched polyester oligomer (Hyperbranched Polymer Boltorn H40, 490 mgKOH/g in hydroxyl value, 5,100 in weight average molecular weight) was dissolved in a mixed solvent of 75 parts of methyl ethyl ketone (MEK) and 75 parts of ethyl acetate, 6 parts of a polyvalent isocyanurate (TPA-100, manufactured by Asahi Kasei Chemicals Corporation) as a crosslinking agent was added to the solution.

<Comparative Example 1>

A pressure-sensitive adhesive sheet was obtained by the same process as in Example 1, except that 1.5 parts of a polyvalent isocyanurate (TPA-100, manufactured by Asahi Kasei Chemicals Corporation) as a crosslinking agent was added instead.

<Comparative Example 2>

A pressure-sensitive adhesive sheet was obtained by the same process as in Example 2, except that 0.1 parts of dioctyltin dilaurate (EMBILIZER OL-1, manufactured by Tokyo Fine Chemical CO., LTD.) was added as a crosslinking reaction catalyst.

<Comparative Example 3>

A pressure-sensitive adhesive sheet was obtained by the same process as in Example 1, except that the tackifier resin was not added.

<Comparative Example 4>

A pressure-sensitive adhesive sheet was obtained by the same process as in Example 2, except that 80 parts of a tackifier resin (Rikatack PCJ, manufactured by Rika Fine-Tech Inc. Tokushima) was added instead.

<Comparative Example 5>

A pressure-sensitive adhesive sheet was obtained by the same process as in Example 1, except that 100 parts of the polyester B was added in place of the polyester A, 60 parts of a tackifier resin (Rikatack PCJ, manufactured by Rika Fine-Tech Inc. Tokushima) and 2 parts of a polyvalent isocyanurate (TPA-100, manufactured by Asahi Kasei Chemicals Corporation) as a crosslinking agent were added instead, and 0.1 parts of dioctyltin dilaurate (EMBILIZER OL-1, manufactured by Tokyo Fine Chemical CO., LTD.) was added as a crosslinking reaction catalyst.
The composition of each polyester and the results of the evaluation are shown in Table 1, and the composition of each pressure-sensitive adhesive sheet produced using the polyester and the results of the evaluation are shown in Table 2.

(Composition of Polyester)

The polyester was dissolved in chloroform-D, and the composition of the polyester was analyzed by subjecting the solution to $^1$H-NMR analysis using a nuclear magnetic resonance (NMR) analyzer 400-MR manufactured by Varian, Inc.

(Molecular Weight)

The number average molecular weight (Mn) and the weight average molecular weight (Mw) were determined as described below. The polyester composition (the polyester or a mixture of the polyester and the branched polyester oligomer) was applied onto a release-treated polyethylene terephthalate (PET) film so that a 100 $\mu$m thick coating could be formed after drying, and the coating was dried at 120°C for 2 hours so that the solvent was removed. The dried product was peeled off from the PET and used as a measurement piece. Subsequently, 0.01 g of the measurement piece was weighed and added to 10 g of tetrahydrofuran (THF) and allowed to stand for 24 hours so that it was dissolved. The solution was subjected to gel permeation chromatography (GPC) method, and each molecular weight was determined from the calibration curve obtained using polystyrene standards.
(Measurement Conditions)
Analyzer: HLC-8220GPC, manufactured by TOSOH CORPORATION
Sample injection volume: 20 $\mu$l
Eluent: THF
Flow rate (flow speed): 0.300 ml/minute
Measurement (column) temperature: 40°C
Column: G6000H$_6$, manufactured by TOSOH CORPORATION
Column size: 7.5 mm ID x 30.0 cm L
Detector: differential refractometer (RI)

(Glass Transition Temperature of Polyester)

The glass transition temperature (Tg (°C)) was determined using a differential scanning calorimeter (DSC-220 (product name), manufactured by Seiko Instruments Inc.) under the following measurement conditions: 5 mg of a measurement sample placed in an aluminum pan; temperature, -120 to 150°C; temperature rise rate, 20°C/minute.

(Hydroxyl Value of Polyester and Polyester Composition)

About 0.5 g of a sample of the polyester or the polyester composition was placed in a 250 ml Erlenmeyer flask and weighed. Subsequently, 20.00 ml of a solution prepared by mixing acetic anhydride and anhydrous pyridine in a ratio of 1:10 (weight ratio) was taken and added to the Erlenmeyer flask, and a condenser was attached thereto. The mixture was refluxed under stirring for 20 minutes and then cooled to room temperature. Subsequently, 20 ml of acetone and 20 ml of distilled water were added to the Erlenmeyer flask through the condenser. After a phenolphthalein indicator was added thereto, the mixture was titrated with an aqueous 1.00 N (normal) sodium hydroxide solution. The hydroxyl value (mgKOH/g) was calculated by subtracting the result of additional measurement of a blank (containing no sample) from the result of the titration.

(Acid Value of Polyester and Polyester Composition)

In 20 ml of chloroform was dissolved 0.2 g of a sample of the polyester or the polyester composition. Using phenolphthalein as an indicator, the solution was titrated with a 0.1 N (normal) potassium hydroxide-ethanol solution, and the acid value (mgKOH/g) was calculated.

(Biomass Degree)

The percentage of the weight of the plant-derived raw materials used to the weight of all raw materials used was calculated and used as the biomass degree (%) in the evaluation.
Biomass degree (%)=100x(the weight of the plant-derived raw materials used)/(the weight of all raw materials used)

(Gel Fraction)

The pressure-sensitive adhesive sheet (with a 50 $\mu$m thick pressure-sensitive adhesive layer) obtained in each of the examples and the comparative examples was cut into a 5 cm x 5 cm square piece. The cut piece sample was wrapped in a Teflon (registered trademark) sheet whose weight was known, and the total weight was measured. The wrapped sample was allowed to stand in toluene at 23°C for 7 days, so that the sol fraction was extracted from the sample. Subsequently, the sample was dried at 120°C for 2 hours, and the dried weight was measured. The gel fraction was calculated from the following formula:

```
gel fraction (%)={(the weight after drying-the weight of the Teflon sheet)/(the weight before drying-the weight of the Teflon sheet)}x100
```

(Adhesive Strength to SUS)

The release-treated polyethylene terephthalate (PET) film A was peeled off from the pressure-sensitive adhesive sheet of each of the examples and the comparative examples. A non-release-treated polyethylene terephthalate (PET) film (LUMIRROR 25S-10, manufactured by TORAY INDUSTRIES, INC., 25 $\mu$m in thickness) was bonded to the resulting sheet. The resulting laminate was cut into a 100 mm long, 20 mm wide piece, from which the release-treated polyethylene terephthalate (PET) film B was then peeled off. A stainless steel plate (BA304, manufactured by Nikkal Shoko K.K., 0.5 mm in thickness) was bonded to the resulting piece by one reciprocation of a 2 kg roller to form a test sample. The test sample was measured for 180° peel adhesive strength (adhesive power) (N/20 mm) using a tensile/compression tester (TG-1kN, manufactured by Minebea Co., Ltd.) at a rate of pulling of 300 mm/minute, a temperature of 23±2°C, and a humidity of 65±5%RH, in which the adhesive strength of the first surface (the PET film (A) side surface attached to the stainless steel plate) was measured when the non-release-treated PET film and the pressure-sensitive adhesive layer were peeled off from the stainless steel plate.
The adhesive strength of the second surface was also measured when the PET film (B) side surface was attached to the stainless steel plate.

(Adhesive Strength to Acrylic Plate)

A test sample was prepared and evaluated by the same process as in the case of the adhesive strength to SUS, except that an acrylic plate (ACRYLITE, manufactured by Mitsubishi Rayon Co., Ltd., 2 mm in thickness) was used in place of the stainless steel plate.

(Holding Power)

A non-release-treated PET film (LUMIRROR 25S-10, manufactured by TORAY INDUSTRIES, INC., 25 μm in thickness) was bonded (press-bonded) to one side of the 100 μm thick, double sided, pressure-sensitive adhesive sheet (a single pressure-sensitive adhesive layer) by one reciprocation of a roller under a pressure of 2 kg. Subsequently, a Bakelite plate (1 mm in thickness) was bonded to the other side of the pressure-sensitive adhesive layer from the PET film by one reciprocation of a roller under a pressure of 2 kg in such a manner that the bonding area was 10 mm x 20 mm, so that a test sample was obtained. The test sample was allowed to stand in the atmosphere at 23°C for 24 hours and then further allowed to stand at 40°C for 1 hour. Subsequently, the distance (mm) of displacement was measured after the test sample was allowed to stand at 40°C for 1 hour while a load of 500 g was applied thereto.

[Table 1]

| Composition (mol% ratio) of polyester and results of evaluation of polyester | | Polyester | |
|---|---|---|---|
| | | A | B |
| Dibasic acid component | Dimer acid | 30 | |
| | Sebacic acid | 10 | |
| Glycol component | 1,3-propylene glycol | 39 | |
| | Ethylene glycol | | 0.2 |
| | Trimethylolpropane | 1 | |
| Lactic acid | DL-lactide | 20 | 51 |
| Copolymerized component | ε-caprolactone | | 49 |
| Tg | (°C) | -54 | -39 |
| Hydroxyl vale | mgKOH/g | 6.0 | 0.6 |
| Acid value | mgKOH/g | 0.6 | 1.1 |
| Weight average molecular weight (Mw) | | 153,000 | 83,000 |
| Number average molecular weight (Mn) | | 29,000 | 49,000 |
| Dispersity (Mw/Mn) | | 5.3 | 1.7 |

[Table 2]

| Results of evaluation of polyester-based pressure-sensitive adhesive composition | | Example | | | | Comparative Example | | | | |
|---|---|---|---|---|---|---|---|---|---|---|
| | | 1 | 2 | 3 | 4 | 1 | 2 | 3 | 4 | 5 |
| Polyester | A | 100 | 100 | 100 | 100 | 100 | 100 | 100 | 100 | |
| | B | | | | | | | | | 100 |
| Branched polyester oligomer | H40 | | | | 8 | | | | | |
| Tackifier resin | PCJ | 20 | 60 | 50 | 20 | 20 | 60 | 0 | 80 | 80 |
| Crosslinking agent | TPA-100 | 2 | 8 | 4 | 6 | 1.5 | 8 | 2 | 8 | 2 |
| Catalyst | OL-1 | | | | | | 0.1 | | | 0.1 |

(continued)

| Results of evaluation of polyester-based pressure-sensitive adhesive composition | | Example | | | | Comparative Example | | | | |
|---|---|---|---|---|---|---|---|---|---|---|
| | | 1 | 2 | 3 | 4 | 1 | 2 | 3 | 4 | 5 |
| Gel fraction of pressure-sensitive adhesive layer | wt% | 53 | 82 | 68 | 65 | 43 | 94 | 53 | 82 | 68 |
| Adhesive strength to SUS (first surface) | N/20 mm | 9.8 | 9.0 | 9.5 | 9.0 | Cohesive failure | 8.5 | 5.5 | 8.3 | 4.8 |
| Adhesive strength to SUS (second surface) | N/20 mm | 9.6 | 9.2 | 9.5 | 9.1 | Cohesive failure | 8.3 | 5.3 | 8.0 | 5.0 |
| Adhesive strength to acrylic plate (first surface) | N/20 mm | 9.9 | 9.2 | 9.3 | 9.1 | Cohesive failure | 8.5 | 5.5 | 8.3 | 4.8 |
| Adhesive strength to acrylic plate (second surface) | N/20 mm | 9.7 | 9.0 | 9.1 | 9.2 | Cohesive failure | 8.5 | 5.5 | 8.3 | 5.4 |
| Holding power | mm | 2 | 2 | 0 | 1 | Drop | 1 | 1 | Drop | Drop |
| Biomass degree | wt% | 97 | 94 | 96 | 89 | 97 | 94 | 97 | 95 | 67 |

From the evaluation results in Table 2, it was demonstrated that in all of Examples 1 to 4, the pressure-sensitive adhesive layer had a gel fraction, an adhesive strength to SUS and so on, and a holding power each in the desired range, and also had good adhesive properties. Very high biomass degrees of 89 to 97% by weight were also shown, which indicated that it is possible to achieve the substitution of plant-derived materials, which are global environmentally-friendly and so-called carbon neutral.

In contrast, it was demonstrated that in Comparative Example 1 where the added amount of the crosslinking agent was small, the pressure-sensitive adhesive layer was not able to reach the desired gel fraction, cohesive failure occurred during the measurement of the adhesive strength to SUS and so on, and the test sample itself dropped due to the holding power lower than that of the examples, so that stable adhesive strength was not obtained. It was demonstrated that in Comparative Example 2, the crosslinking reaction proceeded too much due to the addition of the crosslinking reaction catalyst, so that the gel fraction of the pressure-sensitive adhesive layer exceeded the desired range and that the adhesive strength to SUS and so on decreased, which made it impossible to obtain stable adhesive strength. In Comparative Example 3, no tackifier resin was added, and in Comparative Example 4, the added amount of the tackifier resin was larger than the specified amount. Therefore, it was demonstrated that the adhesive strength to SUS and so on was low in both comparative examples and that in Comparative Example 4, the test sample itself dropped due to the low holding power, so that stable adhesive strength was not obtained. It was demonstrated that in Comparative Example 5 where the polyester used was produced without the dibasic acid, a very low adhesive strength was shown to SUS and so on, and the test sample itself dropped due to the low holding power, so that stable adhesive strength was not obtained. In addition, the biomass degree was as low as 67% by weight, which does not make possible the substitution of carbon-neutral, plant-derived materials.

**Claims**

1. A double sided pressure-sensitive adhesive sheet, comprising:

a pressure-sensitive adhesive layer made from a polyester-based pressure-sensitive adhesive composition comprising a polyester comprising at least a lactic acid unit, a dibasic acid unit, and a glycol unit, a tackifier resin, and a crosslinking agent, wherein

the dibasic acid unit comprises a dimer acid,

the polyester has a weight average molecular weight of 20,000 to 200,000 and a glass transition temperature of -70 to -20°C as measured using a differential scanning calorimeter at a temperature rise rate of 20°C/minute,

the polyester has a hydroxyl value of 1 to 60 mgKOH/g,

the adhesive composition contains 10 to 70 parts by weight of the tackifier resin based on 100 parts by weight of the polyester, and

the pressure-sensitive adhesive layer has a gel fraction of 50 to 90% by weight.

2. The double sided pressure-sensitive adhesive sheet according to claim 1, wherein the polyester contains 10 to 50% by mole of the lactic acid unit and 50 to 90% by mole of other components than the lactic acid unit, and the molar ratio of the dibasic acid unit to the glycol unit is 1:0.8 to 1:1.2.

3. The double sided pressure-sensitive adhesive sheet according to claim 1 or 2, wherein the dibasic acid unit further comprises an aliphatic dibasic acid other than the dimer acid.

4. The double sided pressure-sensitive adhesive sheet according to any one of claims 1 to 3, wherein the polyester comprises a tri- or polyfunctional carboxylic acid and/or polyol component as a component other than the lactic acid unit, the dibasic acid unit, and the glycol unit, and the polyester has a dispersity (Mw/Mn) of 2.5 to 10.0.

5. The double sided pressure-sensitive adhesive sheet according to any one of claims 1 to 4, wherein the polyester has an acid value of 5 mgKOH/g or less.

6. The double sided pressure-sensitive adhesive sheet according to any one of claims 1 to 5, wherein the crosslinking agent is a polyvalent isocyanurate.

7. The double sided pressure-sensitive adhesive sheet according to any one of claims 1 to 6, wherein the tackifier resin is obtained from a plant-derived raw material.

| | | |
|---|---|---|
| **INTERNATIONAL SEARCH REPORT** | | International application No.<br>PCT/JP2010/068455 |

**A. CLASSIFICATION OF SUBJECT MATTER**
*C09J7/00*(2006.01)i, *C09J11/00*(2006.01)i, *C09J167/02*(2006.01)i, *C09J167/04*
(2006.01)i, *C09J175/06*(2006.01)i

According to International Patent Classification (IPC) or to both national classification and IPC

**B. FIELDS SEARCHED**

Minimum documentation searched (classification system followed by classification symbols)
C09J1/00-201/10, C08G63/00-64/42, C08G18/00-18/87, C08G71/00-71/04,
C08K3/00-13/08, C08L1/00-101/14

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 04-328186 A (Toyobo Co., Ltd.),<br>17 November 1992 (17.11.1992),<br>claim 1<br>(Family: none) | 1-7 |
| A | JP 2002-097437 A (Toyobo Co., Ltd.),<br>02 April 2002 (02.04.2002),<br>claims 1 to 2<br>(Family: none) | 1-7 |
| A | JP 2006-131705 A (Dainippon Ink And Chemicals,<br>Inc.),<br>25 May 2006 (25.05.2006),<br>claims 1 to 7<br>(Family: none) | 1-7 |

| ☒ Further documents are listed in the continuation of Box C. | ☐ See patent family annex. |
|---|---|

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22 November, 2010 (22.11.10) | Date of mailing of the international search report<br>14 December, 2010 (14.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/068455

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-045914 A (The Nippon Synthetic Chemical Industry Co., Ltd.), 22 February 2007 (22.02.2007), claims 1 to 5 (Family: none) | 1-7 |
| A | JP 2007-308626 A (Nitto Denko Corp.), 29 November 2007 (29.11.2007), claims 1 to 8 (Family: none) | 1-7 |
| A | JP 2008-013593 A (Nitto Denko Corp.), 24 January 2008 (24.01.2008), claims 1 to 7 (Family: none) | 1-7 |
| A | JP 2008-195819 A (Nitto Denko Corp.), 28 August 2008 (28.08.2008), claims 1 to 4 (Family: none) | 1-7 |
| P,A | WO 2010/016514 A1 (Nitto Denko Corp.), 11 February 2010 (11.02.2010), claims 1 to 11 & JP 2010-37463 A | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005023114 A
- JP 2005255877 A